# EUROPEAN PATENT APPLICATION

(11) **EP 4 636 706 A1**
(43) Date of publication of application: **22.10.2025**
(21) Application number: 25162019.1
(22) Date of filing: 06.03.2025
(51) Int. Cl.: G06V 10/26, G06V 10/764, G06V 10/82, G06V 20/00

(54) **FRAUDULENT IMAGE DETECTOR AND A COMPUTER-IMPLEMENTED METHOD OF DETECTING A FRAUDULENT IMAGE**

(30) Priority: 18.04.2024 FR 2404051
(71) Applicant: IDEMIA Public Security France, 92400 Courbevoie (FR)
(72) Inventor: HSU, Rein-lien, 92400 COURBEVOIE (FR); MAYER, Joseph, 92400 COURBEVOIE (FR); MARTIN, Brian, 92400 COURBEVOIE (FR)
(74) Representative: IPS

(57) **Abstract**

The invention concerns a fraudulent image detector (4) comprising: a first segmenter (6) configured to compute first probability data from an image showing personal identifiable information of an individual, wherein the first probability data indicates, for each pixel of the image, a probability that the pixel shows a security pattern; a second segmenter (8) configured to compute second probability data from the image, wherein the second probability data indicates, for each pixel of the image, a probability that the pixel is part of a foreground region showing the personal identifiable information or part of a backdrop region showing no personal identifiable information; a classifier (12) configured to compute score data from the first probability data and the second probability data.

## Description

### TECHNICAL FIELD

This disclosure deals with a fraudulent image detector and a computer-implemented method of detecting a fraudulent image.

### BACKGROUND

One of major frauds in identity documents is related to portrait photo swap which replaces a genuine facial personal identifiable information (PII) with a fraudulent face photo. The photo swaps can be either digital or physical substitution of the genuine portrait photo. Such a substitution leaves some evidence that may be very subtle and invisible to human verifier/operators.

Known solutions for detecting such frauds involve an analysis of pixel-wise chromaticity statistics and track a hue variation over video frames. Such solutions have disadvantages, including the requirement of multiple frames and the lack of performance as the chromaticity, hue-based heuristics would miss holograms appearing near pale or colorless.

### SUMMARY

A goal of this disclosure is proposing a solution for detecting a fraud in a single image.

It is therefore proposed a fraudulent image detector comprising: a first segmenter configured to compute first probability data from an image showing personal identifiable information of an individual, wherein the first probability data indicates, for each pixel of the image, a probability that the pixel shows a security pattern; a second segmenter configured to compute second probability data from the image, wherein the second probability data indicates, for each pixel of the image, a probability that the pixel is part of a foreground region showing the personal identifiable information or part of a backdrop region showing no personal identifiable information; a classifier configured to compute score data from the first probability data and the second probability data, wherein the score data indicates a probability that the backdrop region as a whole shows a security pattern and that the foreground region as a whole shows no security pattern; and an output module configured to output a result indicating that the image is fraudulent whenever the probability indicated by the score data is greater than a threshold. The fraudulent image detector according to the invention does not require multiple frames as it can use a single image.

The fraudulent image detector may further comprise optional features, which are listed below, and which may be taken alone or combined whenever it makes sense.

Advantageously, the second probability data indicates the two probabilities, for each pixel of the image: the probability that the pixel is part of a foreground region showing the personal identifiable information and the probability that the pixel is part of a backdrop region showing no personal identifiable information. This allows in particular the detection of a fraud by swap of the portrait photo only without affecting the background.

Optionally, the first probability data comprises, for each pixel of the image: a probability that the pixel shows a hologram, and a probability that the pixel shows an overlay, wherein the overlay preferably consists of dots, lines or a combination thereof.

Optionally, the score data comprises: hologram score data indicating a probability that the backdrop region shows a hologram and that the foreground region shows no hologram, overlay score data indicating a probability that the backdrop region shows an overlay and that the foreground region shows no overlay, and the result indicates that the image is fraudulent whenever the probabilities indicated by the hologram score data or by the overlay score data are greater than respective thresholds.

Optionally, the image comes from an identity document issued by a jurisdiction, and wherein the output module is further configured to: compute a mask from the first probability data, wherein the mask estimates a location of a security pattern in the image, compare the mask and jurisdiction data indicating a location of a reference security pattern in identity documents issued by the jurisdiction, and output the result indicating that the image is fraudulent whenever the estimated location and the reference location mismatch.

Optionally, computing the mask comprises thresholding the probability data, such that the mask indicates, for each pixel of the image, whether the pixel shows a security pattern or not.

Optionally, at least one of the first segmenter, the second segmenter and the classifier is a convolutional neural network.

Optionally, the personal identifiable information comprises a biometric feature, such as the face of the individual or a fingerprint of the individual.

A second subject-matter of the present disclosure is a computer-implemented method of detecting a fraudulent image, the method comprising: computing probability data from an image showing personal identifiable information of an individual, wherein the probability data indicates, for each pixel of the image, a probability that the pixel shows a security pattern; computing second probability data from the image, wherein the second probability data indicates, for each pixel of the image, a probability that the pixel is part of a foreground region showing the personal identifiable information or part of a backdrop region showing no personal identifiable information; computing score data from the probability data and the segmentation data, wherein the score data indicates a probability that the backdrop region as a whole shows a security pattern and that the foreground region as a whole shows no security pattern; and outputting a result indicating that the image is fraudulent whenever the probability indicated by the score data is greater than a threshold.

Advantageously, the second probability data indicates the two probabilities, for each pixel of the image: the probability that the pixel is part of a foreground region showing the personal identifiable information and the probability that the pixel is part of a backdrop region showing no personal identifiable information.

A third subject-matter of the present disclosure is a computer program product comprising program code instructions to perform the method constituting the second subject-matter, when the program is executed by a computer.

A fourth subject-matter of the present disclosure is a non-transitory computer-readable medium comprising code instructions for causing a computer to perform the method constituting the second subject-matter.

### DESCRIPTION OF THE DRAWINGS

Other features and advantages of embodiments will be detailed in the following description, which is purely illustrative and not exhaustive, and which must be read in conjunction with the annexed drawings comprising the following figures.
Figure 1 is an image of an identity document according to an embodiment.
Figure 2 shows schematically a system according to an embodiment.
Figure 3 shows steps of a method according to an embodiment.
Figure 4 comprises an image showing personal verifiable information, and a mask computed from said image by the system of figure 2.

### DETAILED DESCRIPTION OF AT LEAST ONE EMBODIMENTS

### Identity document

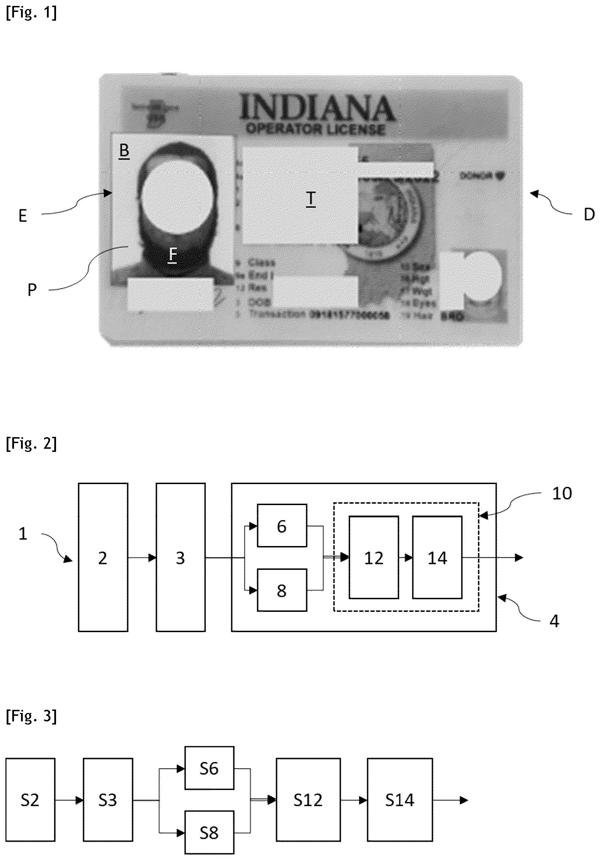

An identify document D aiming at proving the identity of an individual is shown in figure 1. Identity document D comprises personal identifiable information.

Identity document D has originally been issued by a jurisdiction for an individual. All the personal identifiable information of the identity document D normally relates to this individual, who is the legitimate owner of the identity document 1.

The identity document D comprises a photograph P, referring to the primary portrait photograph, showing a face of an individual. The identity document D further comprises text (name, date of birth, nationality and so on). The face and the text are part of the persona identifiable information.

Figure 1 is a raw image of the identity document D. This raw image comprises several regions:
- a foreground region F showing the face of the individual (this region thus shows a portion of the photograph).
- a backdrop region B showing another portion of the photograph which does not carry any personal identifiable information; in the example shown in figure 1, this backdrop regions surrounds the foreground region.
- a background region T which is outside photograph P. Text may appear in background region T.
- a border region E showing a border between the photography P and the background region T. The border region E is usually rectangular. The border region E may comprise an inner border region showing an inner border surrounding photograph P and an outer border region showing an outer border surrounding the inner border.

The identity document D comprises at least one security pattern. The or each security pattern depends on the jurisdiction which has issued the identity document D. In other words, all identity documents of the same type issued by the same jurisdiction comprise security patterns which are similar or even identical.

The or each security pattern is superimposed over the personal identifiable information on the identity document. Therefore, some pixels of the foreground region F show personal identifiable information (the face for example), and some other pixels of the foreground region F show a security pattern covering the personal identifiable information (the face for example) and in such case the pixel is considered to include both as a weighted sum.

In other regions, such as the backdrop region B, some pixels may show a security pattern and some other pixels may not.

In the following, two different types of security patterns will be discussed: holograms and overlays. As known by the skilled person, a hologram is a view-dependent pattern. An overlay may consist of lines, dots, or a combination of lines and dots.

The identity document may comprise a hologram or an overlay or a combination of both security patterns.

### System

Referring to figure 2, a system 1 comprises a camera 2, a preprocessing module 3 and a fraudulent image detector 4.

Camera 2 is configured to acquire an image showing personal identifiable information of an individual. The personal identifiable information may be or include the face the individual.

More precisely, camera 2 may be used to acquire an image of an identity document, such as identity document D shown in figure 1. Identity document D is a driving license, but camera 2 may be used to acquire an image of an identity document of another type, such as a citizen card, a passport, or a driving license.

Preprocessing module 3 is configured to preprocess a raw image acquired by camera 2, thereby producing an image of interest to be evaluated by fraudulent image detector 4. As detailed below, the image produced by the preprocessing module may be a portion of interest of the raw image. In any case, this image shows personal identifiable information of an individual.

A function played by the fraudulent image detector is detecting whether an image showing personal verifiable information is fraudulent or not. The fraudulent image detector may either work on an image of interest output by preprocessing module 3, or work on a raw image acquired by camera 2. In other words, the preprocessing module 3 is optional.

The fraudulent image detector 4 comprises a first segmenter 6, a second segmenter 8 and a fraud evaluation module 10.

The first segmenter 6 is configured to compute first probability data from the image, wherein the first probability data indicates, for each pixel of the image, a probability that the pixel shows a security pattern. The probability data will be detailed below.

The first segmenter 6 is a first convolutional neural network.

The first convolutional neural network may be trained by supervised learning using first training data. The first training data comprise a set of first training images showing personal identifiable information, and which may show at least one security pattern or not. Each first training image is annotated with labels used as ground truth. The labels indicate, for each pixel of the image, whether the pixel shows a security pattern or not. A label associated to a pixel may have for instance three possible values:
- a first value indicating that the pixel shows a hologram,
- a second value indicating that the pixel shows an overlay,
- a third value indicating that the pixel shown no security pattern.

The first value and the second value may be equal (in this case, the label will indicate that a pixel shows a hologram or an overlay, without distinguishing both cases).

The second segmenter 8 is configured to compute second probability data from the image, wherein the segmentation data identifies, for each pixel of the image: a foreground region showing the personal identifiable information, and a backdrop region showing no personal identifiable information.

The second segmenter 8 is a second convolutional neural network distinct and independent from the first convolutional neural network.

The second convolutional neural network may be trained by supervised learning using second training data. The second training data comprise a set of second training images showing personal identifiable information, and which may show at least one security pattern or not. Each second training image is annotated with labels used as ground truth. The labels indicate, for each pixel of the second training image, whether the pixel shows personal identifiable information or not. More precisely, a label may indicate a region the pixel belongs to. A label associated to a pixel may have for instance five possible values:
- a first value indicating that the pixel is part of the background region T,
- a second value indicating that the pixel is part of the outer border region,
- a third value indicating that the pixel is part of the foreground region F,
- a fourth value indicating that the pixel is part of the backdrop region B,
- a fifth value indicating that the pixel is part of a second value indicating that the pixel is part of the inner border region.

The first training data and the second training data may have images in common. Alternatively, the first training data and the second training data are completely different. For instance, synthetic overlays or holograms may be selectively added in images part of the first training data, and not in images of the second training data.

The first convolutional neural network and the second convolutional neural network may work in parallel or sequentially.

The fraud evaluation module 10 comprises a classifier 12 and an output module 14.

The classifier 12 is configured to compute score data from the first probability data (produced by the first segmenter 6) and the second probability data (produced by the second segmenter 8). The score data indicates a probability that backdrop region B as a whole shows a security pattern and that foreground region F as a whole shows no security pattern. Unlike the first probability data and the second probability data, which provide pixelwise information, the score data provide an information at a more global level: either at the level of the region of interest or at the level of the document shown in the image.

The classifier 12 is a third convolutional neural network distinct from the first convolution neural network and the second convolutional neural network.

The third convolutional neural network may be trained by supervised learning using third training data. The third training data comprise first and second probability data output by the first segmenter and by the second segmented in association with labels used as ground truth. The labels indicate whether the first and second probability data come from an image meeting the following requirements or not:
- a backdrop region of the image showing a security pattern and/or no personal identifiable information, and
- a foreground region of the image showing personal identifiable information and no security pattern.

The labels can also indicate whether the first and second probability data come from an image meeting the following requirements or not:
- a foreground region of the image showing a security pattern and/or no personal identifiable information, and
- a backdrop region of the image showing personal identifiable information and no security pattern.

The output module 14 is configured to output a result indicating that the image inputted in the fraudulent image detector 4 is fraudulent whenever the probability indicated by the score data is greater than a threshold.

The preprocessing module 3, the first segmenter 6, the second segmenter 8, the classifier 12 and the output module may be distinct hardware components, each hardware component comprising a memory storing a computer program and a processor for executing code instructions of the computer program. Alternatively, modules 3, 6, 8, 12 are portions of a computer program run by a processor of system 1 and stored in a memory of system 1.

### Method

A computer-implemented method using the system 1 described above comprises the following steps.

In an acquisition step S2, the camera 2 acquires a raw image of an identity document, as described above. It will be assumed in the following that the raw image is the image of figure 1, showing identity document D. The raw image may for example have a normalized 400dpi card rendering.

In a preprocessing step S3, the preprocessing module 3 produces an image of interest from the raw image, wherein the image of interest shows personal identifiable information of an individual.

The preprocessing step S3 may comprise cropping the image, such that the image of interest is a portion of interest of the raw image. The image of interest includes photography P of the individual. The size of the image of interest may be normalized to for instance 320x320 after the cropping.

Preferably, the image not only covers photograph P but also at least a port of background region T. This allows to check the continuity at photo boundary and compensate the detection errors of a portrait (not every portrait photo shows a clear rectangular boundary). A skilled person may for instance apply the checking/compensation method taught in US18/062 963.

In a first segmentation step S6, the first segmenter 6 computes first probability data from the image. The first probability data indicates, for each pixel of the image, a probability that the pixel shows a security pattern.

The first probability data take different forms. In an embodiment, the probability data comprises at least one probability map (sometimes named "heatmap" in the literature), each probability map being associated with a respective type of security pattern.

Each probability map comprises, for each pixel of the image, a probability that the pixel shows a security pattern of the type associated to the map. In other words, each probability maps comprises as many probabilities as the number of pixels of the image.

In an embodiment, the probability data comprises a hologram probability map and an overlay probability map. The hologram probability map comprises, for each pixel of the image, a probability that the pixel shows a hologram, the first segmenter being trained and designed to detect the holograms, tolerating partial invisibility of holograms. The overlay probability map comprises, for each pixel of the image, a probability that the pixel shows an overlay. A pixel is considered to show a single piece of information, not many of them. Therefore, all probabilities associated to the same pixels will be lower or equal to 1.

In another embodiment, the probability data comprises a single probability map comprising, for each pixel of the image, a probability that the pixel shows a security pattern of any type. In other words, overlays and holograms are not distinguished in this embodiment.

In a second segmentation step S8, the second segmenter 8 computes second probability data from the image. The second probability data indicates, for each pixel of the image, a probability that the pixel is part of foreground region F showing personal identifiable information or part of backdrop region B showing no personal identifiable information.

In an embodiment, the second probability data comprises a single probability map comprising a plurality of probabilities respectively associated to the pixels of the image. Each probability of the map may be a probability that the pixel is part of foreground region F showing personal identifiable information and/or a probability that the pixel is part of backdrop region B showing no personal identifiable information.

In another embodiment, the second probability data provides fined grained information. To that end, the second probability data may comprise several probability maps, such as:
- a foreground probability map indicating, for each pixel of the image, a probability that the pixel is part of foreground region F showing a face of an individual,
- a backdrop probability map indicating, for each pixel of the image, a probability that the pixel is part of backdrop region B included in photography P on the identity document D but not showing the face of the individual,
- a border probability map indicating, for each pixel of the image, a probability that the pixel is part of border region E.
- a background probability map indicating, for each pixel of the image, a probability that the pixel is part of background region T showing a part of the identity document D outside photograph P.

The first segmentation step S6 and the second segmentation step S8 may be performed in parallel or sequentially, in any order.

In a classification step S12, the classifier 12 computes score data from the first probability data and the second probability data. Unlike the first probability data and the second probability data, which provide pixelwise information, the score data provide a more global information. More precisely, the score data indicates a probability that a particular event of interest occurs in the image. The event of interest is that the backdrop region shows a security pattern and that the foreground region shows no security pattern.

This event of interest reveals an inconsistency which is most probably due to a physical modification of the personal identifiable information. For example, an attacker may have pasted a second photograph over the photograph initially present in the identify document D issued by a jurisdiction, the second photograph showing the face of another individual and not showing any security pattern. Alternatively, an attacker may have modified the foreground region F of the image to replace the face of the individual by a face of another individual.

It should be noted that the probability of this event of interest may be indicated in different ways, as illustrated below.

In a first embodiment, the score data consists in a single score, said score indicating the probability of the event of interest.

In a second embodiment, the score data include two scores: a score indicating a probability that the backdrop region shows a security pattern and another score indicating a probability that the foreground region shows no security pattern.

In a third embodiment, the score data comprise hologram score data indicating a probability that the backdrop region shows a hologram and that the foreground region shows no hologram, and overlay score data indicating a probability that the backdrop region shows an overlay and that the foreground region shows no overlay.

The hologram score data may consist in a single hologram score indicating that the following event occurs: the backdrop region shows a hologram, and the foreground region shows no hologram. Alternatively, the hologram score data may include two scores: a score indicating a probability that the backdrop region shows a hologram and another score indicating a probability that the foreground region shows no hologram.

Similarly, the overlay score data may consist in a single overlay score indicating a probability that the following event occurs: the backdrop region shows an overlay, and the foreground region shows no overlay. Alternatively, the overlay score data may include two scores: a score indicating a probability that the backdrop region shows an overlay and another score indicating a probability that the foreground region shows no overlay.

In summary, the score data may take different forms: one single score directly providing the probability of the event of interest described above, or a set of scores providing partial information and which may be combined to obtain indirectly the probability of the event of interest.

The output module 14 performs a postprocessing step S14. the postprocessing step S14 comprises comparing the score data and least one threshold, and outputting a result, the result having a value which depends on the comparison(s).

The number of thresholds involved in this step depends on the contents of the score data. This step may involve as many thresholds as the number of scores included in the score data. For instance, if the score data consists in a single score, said score is compared with a single threshold. No other threshold is involved. Alternatively, if the score data comprises a hologram score and an overlay score, the hologram score may be compared with a first threshold and the overlay score may be compared with a second threshold, either in parallel or sequentially (in any order). If the score data comprises four scores, four comparisons are performed, either in parallel or sequentially.

Whatever the contents of the score data and the number of comparisons performed, the results output by the output module 14 indicates that the image is fraudulent whenever the probability that the event of interest occurs (i.e. whenever the backdrop region shows a security pattern and that the foreground region shows no security pattern) is greater than a main threshold.

In contrast, the results output by the output module 14 indicates that the image is not fraudulent whenever the probability that the event of interest occurs (i.e. the backdrop region shows a security pattern and that the foreground region shows no security pattern) is not greater than said main threshold.

If the score data consists of a single score, then the main threshold is the threshold compared with said single score. Else, the main threshold may be determined from all thresholds to which the multiple scores of the score data have been compared.

The output module 14 advantageously comprises the sub-steps details below, which are optional.

The output module 14 computes a mask from the first probability data. The mask estimates a location of at security pattern in the image. More precisely, the mask may estimate a location of a hologram and/or a location of an overlay in the image. In fact, the output module may compute many masks, each mask being associated with a security pattern of a specific type.

Computing the mask may comprise thresholding the first probability data. In this case, the mask may be a binary mask, i.e. a mask comprising Booleans respectively associated with the pixels of the image.

The output module 14 compares a mask computed at the localization step and jurisdiction data indicating a location of a reference security pattern in identity documents issued by the jurisdiction which has issued the identity document D (said document D being at least in part shown in the image inputted in the fraudulent image detector 4).

The result output by the output module 14 indicates that the image is fraudulent whenever the estimated location and the reference location mismatch.

In other words, when these additional steps are implemented by the output module 14, the output module 14 make the decision of reporting a fraud when it considers that at least one of the following events of interest occurs in the image:
- backdrop region B shows a security pattern and foreground region F shows no security pattern.
- a security pattern is found in the image (by means of the first segmenter) but its location does not match with a reference location decided by the relevant jurisdiction, i.e. the found security pattern is not located where it is should be.

A third event of interest may be that both the backdrop and the foreground regions show no security pattern. This event is likely to reveal a fraud (the entire rectangular photo may have been replaced). This third event may be evaluated at postprocessing step S14 and may involve additional comparison(s) between the score data at least one additional threshold.

These events of interest may be weighted differently based on their deviation/significance.

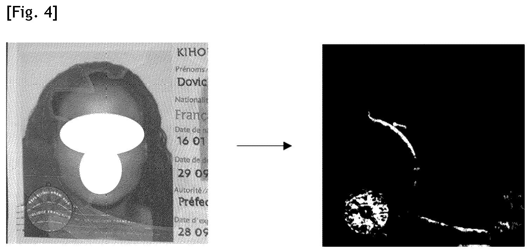

The left part of figure 4 comprises a PII, as an image showing the face of an individual, and two security patterns extending over said face: a circular hologram and an overlay consisting of lines (note that the white zone covering the face of the first individual is normally not present in the image; this white zone has been added in figure 4 for privacy purpose only). The right part of figure 4 comprises a mask generated by the fraudulent image detector from the first image. It can be observed that a significant portion of the circular hologram and lines of the overlay have been properly detected by the fraudulent image detector 4.

The mask(s) generated by the output module 14 may also be used for other checks like ghost face matching, etc.

### Other embodiments

It has been described an embodiment wherein the personal identifiable information comprises a primary portrait photograph showing a face of an individual. However, other embodiments are possible. The photograph could in variant refer to a ghost portrait photograph. Moreover, the personal identifiable information is not limited to faces, and could be or include other biometric information, for example a fingerprint.

The preprocessing module 3 is optional. This means that the first segmenter 6 and/or the second segmenter 8 may process the raw image acquired by the camera 2.

## Claims

1. A fraudulent image detector (4) comprising:
• a first segmenter (6) configured to compute first probability data from an image showing personal identifiable information of an individual, wherein the first probability data indicates, for each pixel of the image, a probability that the pixel shows a security pattern;
• a second segmenter (8) configured to compute second probability data from the image, wherein the second probability data indicates, for each pixel of the image, a probability that the pixel is part of a foreground region showing the personal identifiable information or part of a backdrop region showing no personal identifiable information;
• a classifier (12) configured to compute score data from the first probability data and the second probability data, wherein the score data indicates a probability that the backdrop region as a whole shows a security pattern and that the foreground region as a whole shows no security pattern; and
• an output module (14) configured to output a result indicating that the image is fraudulent whenever the probability indicated by the score data is greater than a threshold.

2. The fraudulent image detector (4) of the preceding claim, wherein the first probability data comprises, for each pixel of the image:
• a probability that the pixel shows a hologram, and
• a probability that the pixel shows an overlay, wherein the overlay preferably consists of dots, lines or a combination thereof.

3. The fraudulent image detector (4) of any of the preceding claims, wherein:
• the score data comprises:
• hologram score data indicating a probability that the backdrop region shows a hologram and that the foreground region shows no hologram,
• overlay score data indicating a probability that the backdrop region shows an overlay and that the foreground region shows no overlay; and
• the result indicates that the image is fraudulent whenever the probabilities indicated by the hologram score data or by the overlay score data are greater than respective thresholds.

4. The fraudulent image detector (4) of any of the preceding claims, wherein the image comes from an identity document (D) issued by a jurisdiction, and wherein the output module 14 is further configured to:
• compute a mask from the first probability data, wherein the mask estimates a location of a security pattern in the image,
• compare the mask and jurisdiction data indicating a location of a reference security pattern in identity documents issued by the jurisdiction,
• output the result indicating that the image is fraudulent whenever the estimated location and the reference location mismatch.

5. The fraudulent image detector (4) of the preceding claim, wherein computing the mask comprises thresholding the probability data, such that the mask indicates, for each pixel of the image, whether the pixel shows a security pattern or not.

6. The fraudulent image detector (4) of any of the preceding claims, wherein at least one of the first segmenter (6), the second segmenter (8) and the classifier (12) is a convolutional neural network.

7. The fraudulent image detector (4) of any of the preceding claims, wherein the personal identifiable information comprises a biometric feature.

8. The fraudulent image detector (4) of the preceding claim, wherein the biometric feature is at least a portion of the face of the individual or a fingerprint of the individual.

9. Computer-implemented method of detecting a fraudulent image, the method comprising:
• computing (S6) probability data from an image showing personal identifiable information of an individual, wherein the probability data indicates, for each pixel of the image, a probability that the pixel shows a security pattern;
• computing (S8) second probability data from the image, wherein the second probability data indicates, for each pixel of the image, a probability that the pixel is part of a foreground region showing the personal identifiable information or part of a backdrop region showing no personal identifiable information;
• computing (S12) score data from the probability data and the segmentation data, wherein the score data indicates a probability that the backdrop region as a whole shows a security pattern and that the foreground region as a whole shows no security pattern; and
• outputting (S14) a result indicating that the image is fraudulent whenever the probability indicated by the score data is greater than a threshold.

10. Computer program product comprising program code instructions to perform the method of the preceding claim when the program is executed by a computer.
